# EUROPÄISCHE PATENTSCHRIFT

(11) **EP 2 883 686 B1**
(45) Veröffentlichungstag und Bekanntmachung des Hinweises auf die Patenterteilung: **31.03.2021**
(21) Anmeldenummer: 14195802.5
(22) Anmeldetag: 02.12.2014
(51) Int. Cl.: B29C 70/38

(54) **Vorrichtung zum Legen von Faserbändern**
Device for the laying down of fibre tapes
Dispositif de pose de bandes de fibre

(30) Priorität: 16.12.2013 AT 508292013
(43) Veröffentlichungstag der Anmeldung: 17.06.2015
(73) Patentinhaber: GFM GmbH, 4403 Steyr (AT)
(72) Erfinder: Dietachmayr, Harald, 4522 Sierning (AT)
(74) Vertreter: Hübscher & Partner Patentanwälte GmbH

(56) Entgegenhaltungen:
- EP-B1- 0 371 289
- FR-A1- 2 529 871
- US-A- 4 992 133

## Beschreibung

Die Erfindung bezieht sich auf eine Vorrichtung zum Legen von Faserbändern mit einer Umlenkführung für die Faserbänder aus quer zur Umlenkachse nebeneinandergereihten Drucklamellen und mit einem in Legerichtung verlagerbaren Gestell zur Aufnahme der Drucklamellen, wobei zumindest ein Teil der Drucklamellen je für sich einen gegenüber dem Lamellenkörper in Andrückrichtung federnden Gleitschuh zur Bandumlenkung bildet und jede Drucklamelle mit einer Aussparung versehen wird, die den Gleitschuh vom übrigen Lamellenkörper trennt.

Zum Herstellen von Fasergelegen werden üblicherweise Legeköpfe mit einer Umlenkführung für die Faserbänder eingesetzt, die mit Hilfe von diese Umlenkführung bildenden, nebeneinandergereihten Drucklamellen an die bereits gelegten Faserlagen angedrückt werden. Die Faserbänder, die ein eine Faserschicht tragendes Klebeband umfassen, werden von einer Vorratsrolle im Ausmaß der Vorschubbewegung des Legekopfs abgezogen und der Umlenkführung zugeführt, um einerseits die Faserschicht an die bereits gelegten Faserlagen anzudrücken und anderseits das Klebeband von der Faserschicht abzuziehen, was einen vergleichsweise kleinen Umlenkradius erfordert. Da die einzelnen Faserlagen des Geleges ohne Lufteinschlüsse dicht aufeinandergelegt werden sollen, ist für eine entsprechende Druckbeaufschlagung der Faserbänder durch die Umlenkführung zu sorgen. Zu diesem Zweck ist es bekannt (EP 0 371 289 B1), die zu einem Paket nebeneinandergereihten Drucklamellen voneinander unabhängig in Andrückrichtung verschiebbar in einem Gestell zu lagern und über eine Membran mit einem Druckmittel zu beaufschlagen, sodass aufgrund der Flexibilität der Membran die einzelnen Drucklamellen auch einem ungleichmäßigen Verlauf der bereits gelegten Faserlagen folgen können. Der voneinander unabhängigen Beaufschlagung der einzelnen Drucklamellen sind allerdings durch die voneinander nicht unabhängigen örtlichen Verformungseigenschaften der Membran Grenzen gesetzt, sodass es keinen Sinn macht, die Drucklamellen zur feineren Anpassung an die Oberflächenform der bereits gelegten Faserlagen dünner als ein Maß auszubilden, das durch die Verformungseigenschaften der Membran zur voneinander unabhängigen Beaufschlagung der Drucklamellen vorgegeben ist. Zur Festlegung der Drucklamellen in einer unverschiebbaren Ausgangslage sind die Drucklamellen mit einer Aussparung in Form eines Langlochs versehen, das einen Gleitschuh zur Bandumlenkung vom übrigen Lamellenkörper trennt und eine Steuerachse aufnimmt.

Darüber hinaus ist es bekannt (FR 2 529 871 A1), eine Vorrichtung zum Legen von Faserbändern mit einer Umlenkführung für die Faserbänder aus quer zur Umlenkachse nebeneinandergereihten, mit einem Anpressdruck beaufschlagbaren Drucklamellen und mit einem in Legerichtung verlagerbaren Gestell zur Aufnahme der Drucklamellen vorzusehen, wobei zumindest ein Teil der Drucklamellen durch die auf die Drucklamellen ausgeübten Kräfte vorspannbare Gleitschuhe zur Bandumlenkung bildet.

Um die Reibung zwischen der Umlenkführung und den Faserbändern zu verringern, ist es bei Vorrichtungen zum Legen von Faserbändern außerdem bekannt (US 5 352 306 A), die Drucklamellen nicht unmittelbar auf die Faserbänder einwirken zu lassen, sondern über eine flexible Gleitschürze, die auf der in Legerichtung vorderen Seite der Drucklamellen an einem die Drucklamellen aufnehmenden Gestell befestigt ist. Eine solche sich über alle Drucklamellen erstreckende Gleitschürze beeinträchtigt jedoch eine feinstufige Anpassung der Umlenkführung an die Oberfläche der bereits gelegten Faserlagen.

Der Erfindung liegt somit die Aufgabe zugrunde, eine einfache und kompakte Umlenkführung für eine Vorrichtung zum Legen von Faserbändern so auszugestalten, dass die Faserbänder über die Drucklamellen mit einem entsprechenden Druck in einer vergleichsweise feinstufigen Anpassung an die jeweilige Oberflächenform der bereits gelegten Faserlagen angedrückt werden kann.

Der Gegenstand der vorliegenden Erfindung ist eine Vorrichtung zum Legen von Faserbändern, gemäß den Merkmalen des Anspruchs 1.

Da die sich durch die Aussparungen ergebenden Verbindungsstege zwischen den Lamellenkörpern und den Gleitschuhen im Rahmen ihres elastischen Biegeverhaltens als Federelemente genützt werden, ergeben sich besonders einfache Konstruktionsverhältnisse. Über die in Andrückrichtung federnden Gleitschuhe kann somit im Rahmen ihrer federnden Vorspannung jeweils unabhängig von den benachbarten Gleitschuhen ein entsprechender Anpressdruck auf die um die Gleitschuhe umgelenkten Faserbänder ausgeübt werden, sodass die Dicke der Drucklamellen bzw. der Gleitschuhe unabhängig davon, ob die einzelnen Drucklamellen gemeinsam oder voneinander unabhängig mit einem Anpressdruck beaufschlagt werden, ausreichend dünn für die jeweils geforderte stufenförmige Anpassung an die Oberflächengestalt der bereits gelegten Faserlagen gewählt werden kann. Es ist lediglich dafür zu sorgen, dass die auf die Drucklamellen ausgeübten Kräfte eine entsprechende federnde Vorspannung der Gleitschuhe und damit ein über die Bandbreite weitgehend gleichmäßiges Andrücken der Faserbänder an die bereits gelegten Faserlagen sicherstellen.

Da aufgrund der gegenüber den Lamellenkörpern federnden Gleitschuhe über das die Membran beaufschlagende Druckmittel eine ausreichende Vorspannung der Gleitschuhe gewährleistet sein muss, ist es möglich, die Gleitschuhe der Drucklamellen in zur Lamellenebene parallele, voneinander unabhängig federnde Gleitsegmente zu unterteilen, was eine besonders feinfühlige Anpassung der Drucklamellen an die Oberflächengestalt des Geleges erlaubt, weil ja die einzelnen Gleitsegmente der Gleitschuhe im Ausmaß der Vorspannung voneinander unabhängig in Andrückrichtung federnd verlagert werden können.

Die Reibung zwischen der Umlenkführung und den Faserbändern sollte möglichst gering ausfallen. Zu diesem Zweck können die Gleitflächen der Drucklamellen entsprechend beschichtet sein. Besonders vorteilhafte Konstruktionsverhältnisse ergeben sich jedoch, wenn die Drucklamellen mit in der Gleitfläche zur Bandumlenkung mündenden Druckluftkanälen versehen sind, sodass die durch diese Druckluftkanäle austretende Druckluft die Reibung zwischen den Gleitflächen und dem Klebeband des jeweiligen Faserbands verringert, ohne den Anpressdruck des Faserbands an die bereits gelegten Faserlagen zu beeinträchtigen. Im Gegenteil, durch den Druck der Druckluft kann das Andrücken der Fasern des Faserbandes an die bereits gelegten Faserlagen vorteilhaft unterstützt werden.

In der Zeichnung ist der Erfindungsgegenstand beispielsweise dargestellt. Es zeigen
- Fig. 1: eine erfindungsgemäße Vorrichtung zum Legen von Faserbändern im Bereich der Umlenkführung in einem schematischen Längsschnitt,
- Fig. 2: diese Vorrichtung in einem Schnitt nach der Linie II-II der Fig. 1,
- Fig. 3: eine der Fig. 1 entsprechende Darstellung einer Konstruktionsvariante einer erfindungsgemäßen Vorrichtung,
- Fig. 4: eine Ausführungsvariante einer Drucklamelle im Bereich des Gleitschuhs in einem Schnitt entsprechend der Linie II-II der Fig. 1 in einem größeren Maßstab und
- Fig. 5: eine weitere Ausbildung einer erfindungsgemäßen Drucklamelle in einer vereinfachten Seitenansicht.

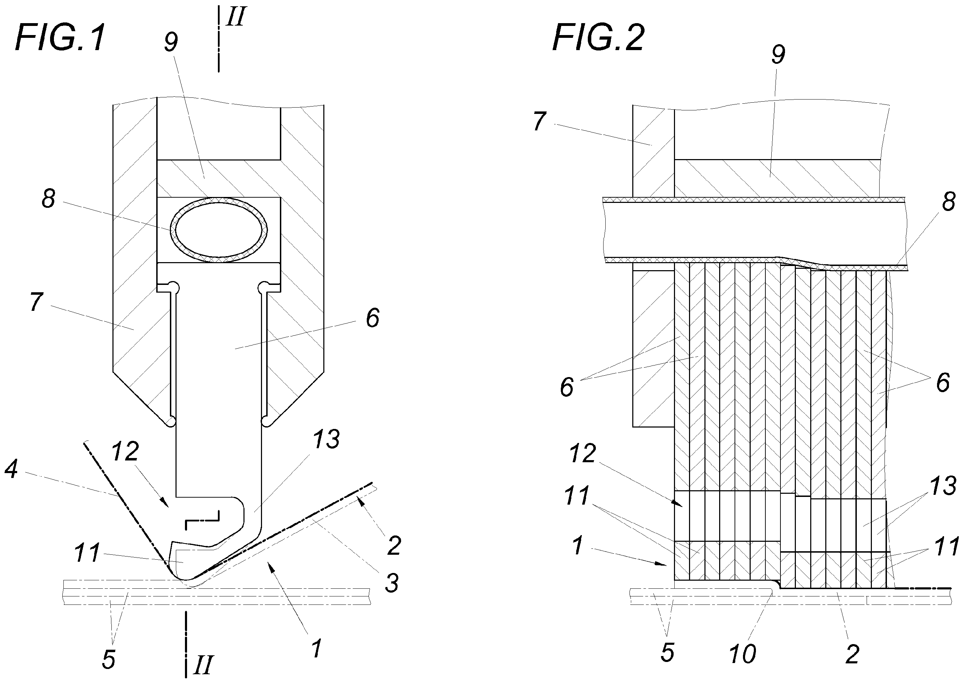

Gemäß dem Ausführungsbeispiel nach den Fig. 1 und 2 weist die Vorrichtung zum Legen von Faserbändern eine Umlenkführung 1 für Faserbänder 2 auf, die ein eine Faserschicht 3 tragendes Klebeband 4 umfassen. Diese Faserbänder 2 werden in Anpassung an den Legevorschub von einer Vorratsrolle abgezogen und mit Hilfe der Umlenkführung 1 an die bereits gelegten Faserlagen 5 eines zu bildenden Fasergeleges angedrückt, wobei das Klebeband 4 von der Faserschicht 3 des Faserbands 2 abgezogen wird, und zwar mit einem vergleichsweise geringen Umlenkradius. Die Umlenkführung 1 setzt sich aus einer Mehrzahl von senkrecht zur Umlenkachse nebeneinandergereihten Drucklamellen 6 zusammen, die in einem Gestell 7 in Andrückrichtung verschiebbar geführt sind und mit Hilfe einer Membran 8 gemeinsam mit einem Druckmittel beaufschlagt werden. Um einfache Konstruktionsverhältnisse zu erreichen, wird die Membran 8 im Ausführungsbeispiel durch einen Druckschlauch gebildet, der sich auf der den Drucklamellen 6 gegenüberliegenden Seite an einer Gestellwand 9 als Widerlager abstützt. Mit einer Druckbeaufschlagung der Membran 8 werden die Drucklamellen 6 an die bereits gelegten Faserlagen 5 angedrückt, wobei aufgrund der Flexibilität der Membran 8 der Stellweg der einzelnen Drucklamellen 6 von der Oberflächenform der bereits gelegten Faserlagen 5 abhängt.

Wie in der Fig. 2 angedeutet wird, kann eine Gelegestufe 10 nicht ohne weiteres durch die Membranverformung berücksichtigt werden, weil sich diese Membranverformung über mehrere Drucklamellen 6 erstreckt. Um trotz dieser durch die Membran 8 bedingten Beschränkung eine feinstufige Anpassung der Umlenkführung 1 an die Oberflächenform des Geleges zu ermöglichen, bilden die Drucklamellen 6 in Andrückrichtung federnde Gleitschuhe 11, die durch eine Aussparung 12 vom übrigen Lamellenkörper getrennt sind. Die verbleibenden Verbindungsstege 13 stellen die in Andrückrichtung federnden Eigenschaften der Gleitschuhe 11 sicher, sodass die Gleitschuhe 11 aufgrund ihrer federnden Vorspannung durch die Beaufschlagung der Lamellen 6 über die Membran 8 das Faserband 2 an die Faserlagen 5 andrücken. Dies bedeutet, dass die Gleitschuhe 11 im Bereich der Gelegestufe 10 zusätzlich zu der Beaufschlagung durch die Membran 8 mit der Wirkung federnd an das Gelege angedrückt werden, dass das Faserband 2 vollflächig an der Gelegestufe 10 anliegt, was durch die Membranbeaufschlagung alleine nicht gewährleistet wäre. In der Fig. 1 ist diese federnde Verlagerung der Gleitschuhe 11 strichpunktiert angedeutet.

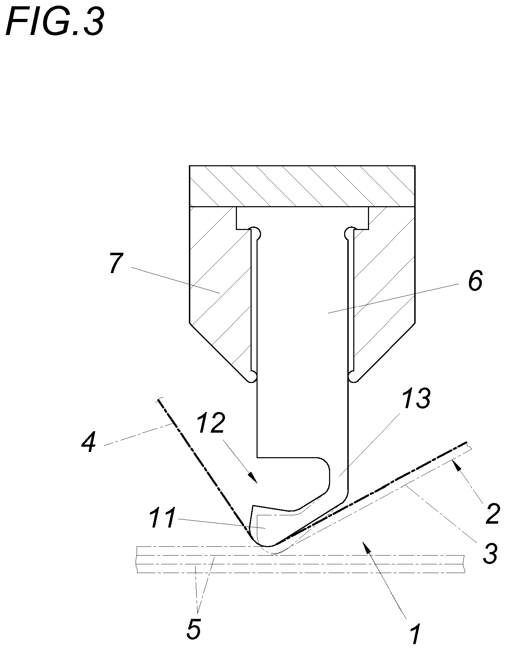

Aufgrund der in Andrückrichtung federnden Gleitschuhe 11 bedarf es insbesondere bei geringeren Dicken der Faserbänder 2 keiner gesonderten Druckbeaufschlagung der einzelnen Drucklamellen 6. Wie in der Fig. 3 dargestellt ist, kann das Gestell 7 die Drucklamellen 6 gegeneinander unverschiebbar aufnehmen, sodass bei einer Belastung des Gestells 7 mit einer entsprechenden Andrückkraft die Gleitschuhe 11 der einzelnen Drucklamellen 2 mit einer Vorspannung beaufschlagt werden, die ein individuelles Andrücken der Gleitschuhe 11 an die bereits gelegten Faserlagen 5 erlaubt. Die einzelnen Drucklamellen 2 können in diesem Fall auf der den Gleitschuhen 11 gegenüberliegenden Seite der Aussparung 12 auch miteinander einstückig verbunden sein.

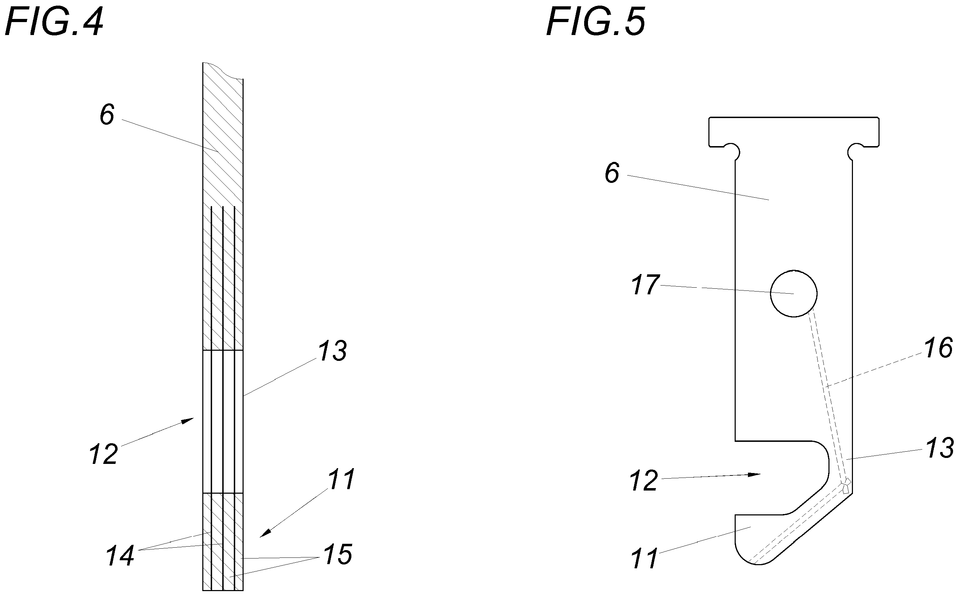

Das Vorsehen von in Andrückrichtung federnden Gleitschuhen 11 erlaubt außerdem eine zusätzliche Abstufung der Druckbeaufschlagung des Faserbands 2 über die Bandbreite, wenn die Gleitschuhe 11 durch zur Lamellenebene parallele Schlitze 14 in Gleitsegmente 15 unterteilt werden, wie dies in der Fig. 4 angedeutet ist. Die Gleitsegmente 15 der Gleitschuhe 11 sind ja aufgrund ihrer Vorspannung über die Membran 8 in der Lage, das Faserband 2 voneinander unabhängig an die Oberfläche der bereits gelegten Faserlagen 5 anzudrücken.

Damit die Reibung zwischen den Gleitflächen der Gleitschuhe 11 und dem Klebeband 4 der Faserbänder 2 verringert werden kann, können diese Gleitflächen mit einem Gleitbelag versehen werden. Besonders wirksame Maßnahmen ergeben sich jedoch, wenn die Drucklamellen 6 gemäß der Fig. 5 mit Druckluftkanälen 16 versehen sind, die in der Gleitfläche der Gleitschuhe 11 münden, sodass die Druckluft zwischen die Gleitfläche der Gleitschuhe 11 und das Faserband 2 geblasen wird. Zur Druckluftversorgung können die Druckluftkanäle 16 von einer gemeinsamen, sich durch das Paket der Drucklamellen 6 erstreckenden Bohrung 17 ausgehen.

## Patentansprüche

1. Vorrichtung zum Legen von Faserbändern (2) mit einer Umlenkführung (1) für die Faserbänder (2) aus quer zur Umlenkachse nebeneinandergereihten Drucklamellen (6) und mit einem in Legerichtung verlagerbaren Gestell (7) zur Aufnahme der Drucklamellen (6), wobei zumindest ein Teil der Drucklamellen (6) je für sich einen gegenüber dem Lamellenkörper in Andrückrichtung federnden Gleitschuh (11) zur Bandumlenkung bildet und jede Drucklamelle (6) mit einer Aussparung (12) versehen wird, die den Gleitschuh (11) vom übrigen Lamellenkörper trennt, wobei der sich durch die Aussparung (12) ergebende einzige Verbindungssteg zwischen dem Lamellenkörper und dem Gleitschuh (11) als Federelement genützt ist.

2. Vorrichtung nach Anspruch 1, **dadurch gekennzeichnet, dass** die Gleitschuhe (11) der Drucklamellen (6) in zur Lamellenebene parallele, voneinander unabhängig federnde Gleitsegmente (15) unterteilt sind.

3. Vorrichtung nach Anspruch 1 oder 2, **dadurch gekennzeichnet, dass** die Drucklamellen (6) mit in der Gleitfläche zur Bandumlenkung mündenden Druckluftkanälen (16) versehen sind.

## Claims

1. Apparatus for laying fibre tapes (2), having a deflection guide (1) for the fibre tapes (2) consisting of pressure plates (6) which are arranged in rows next to one another transversely to the deflection axis, and having a frame (7) which is displaceable in the laying direction for accommodating the pressure plates (6), wherein at least a part of the pressure plates (6) respectively forms in its own right a sliding shoe (11) which is resilient in the pressing direction with respect to the plate body for the deflection of the tape, and each pressure plate (6) is provided with a recess (12) which separates the sliding shoe (11) from the rest of the plate body, wherein the single connecting web produced by the recess (12) between the plate body and the sliding shoe (11) is used as a spring element.

2. Apparatus as claimed in claim 1, **characterised in that** the sliding shoes (11) of the pressure plates (6) are subdivided into sliding segments (15) which are parallel to the plane of the plate and are resilient in a mutually independent manner.

3. Apparatus as claimed in claim 1 or 2, **characterised in that** the pressure plates (6) are provided with compressed-air channels (16) which open into the sliding surface for the deflection of the tape.

## Revendications

1. Dispositif pour poser des bandes de fibres (2), avec un guide de renvoi (1) pour les bandes de fibres (2) provenant de lamelles de pression (6) juxtaposées perpendiculairement à l'axe de renvoi et avec un châssis (7) mobile dans le sens de la pose pour recevoir les lamelles de pression (6), dans lequel au moins une partie des lamelles de pression (6) forment chacune un patin de glissement (11) élastique dans le sens de pression contre le corps lamellaire pour le renvoi des bandes et chaque lamelle de pression (6) est dotée d'une échancrure (12) qui sépare le patin de glissement (11) du reste du corps lamellaire, dans lequel l'unique pont de liaison résultant de l'échancrure (12) entre le corps lamellaire et le patin de glissement (11) fait office d'élément élastique.

2. Dispositif selon la revendication 1, **caractérisé en ce que** les patins de glissement (11) des lamelles de pression (6) sont subdivisés en segments de glissement (15) élastiques indépendamment les uns des autres et parallèles au plan des lamelles.

3. Dispositif selon la revendication 1 ou 2, **caractérisé en ce que** les lamelles de pression (6) sont dotées de canaux d'air comprimé (16) débouchant dans la surface de glissement pour le renvoi des bandes.
